# EUROPEAN PATENT APPLICATION

(11) **EP 4 411 950 A1**
(43) Date of publication of application: **07.08.2024**
(21) Application number: 22875494.1
(22) Date of filing: 21.06.2022
(51) Int. Cl.: H01M 50/24, H01M 50/204, H01M 50/213, H01M 50/247, H01M 50/249, H01M 50/505

(54) **BATTERY UNIT, BATTERY UNIT MANUFACTURING METHOD, ELECTRONIC DEVICE, ELECTRIC TOOL AND ELECTRIC VEHICLE**

(30) Priority: 30.09.2021 JP 2021160560
(71) Applicant: Murata Manufacturing Co., Ltd., Nagaokakyo-shi, Kyoto 617-8555 (JP)
(72) Inventor: TAKATSUJI, Hideyasu, Nagaokakyo-shi, Kyoto 617-8555 (JP)
(74) Representative: Witte, Weller & Partner Patentanwälte mbB
(86) International application number: PCT/JP2022/024713
(87) International publication number: WO 2023/053615

(57) **Abstract**

Waterproofness is improved. Provided is a battery unit including a battery, an electrically conductive member, and a first insulating film. The battery includes a terminal part. The electrically conductive member is electrically coupled to the terminal part and includes a first major surface and a second major surface. The first insulating film is disposed at least on a side of the first major surface of the electrically conductive member. The first insulating film has an opening. The electrically conductive member is exposed through the opening. A cushion member is further provided. The cushion member is disposed between a peripheral edge part of an end face on which the terminal part is provided and the electrically conductive member. The cushion member surrounds the terminal part.

## Description

### Technical Field

The invention relates to a battery unit, a method of manufacturing a battery unit, electronic equipment, an electric tool, and an electric vehicle.

### Background Art

In a battery unit including multiple batteries such as lithium-ion batteries, the batteries are electrically coupled to each other by a tab, for example, as disclosed in PTL 1. Regarding such a battery unit, waterproofness of the batteries is to be secured. For example, PTL 2 listed below discloses a technique of disposing a waterproof ring having a water absorption property around a terminal of a battery.

### Citation List

### Patent Literature

PTL 1: Japanese Unexamined Patent Application Publication No. 2016-134336

PTL 2: Japanese Unexamined Patent Application Publication No. 2006-196277

### Summary of the Invention

### Problem to be Solved by the Invention

A technique disclosed in PTL 1 lacks a viewpoint of waterproofness. Specifically, because a tab has an opening, moisture can enter through the opening. In a technique disclosed in PTL 2, because a waterproof ring having a water absorption property is used, moisture is retained between a battery and a tab, which increases a possibility that a short circuit is caused by migration. Further, in the technique disclosed in PTL 2, because the waterproof ring is disposed individually for each battery, misalignment can occur upon assembly, or the number of assembly processes can increase.

It is therefore an object of the invention to provide a battery unit having improved waterproofness and a method of manufacturing a battery unit having improved waterproofness. It is also an object of the invention to provide electronic equipment, an electric tool, and an electric vehicle that each include the above-described battery unit.

### Means for Solving the Problem

The invention provides a battery unit including a battery, an electrically conductive member, and a first insulating film.

The battery includes a terminal part.

The electrically conductive member is electrically coupled to the terminal part and includes a first major surface and a second major surface.

The first insulating film is disposed at least on a side of the first major surface of the electrically conductive member.

The first insulating film has an opening.

The electrically conductive member is exposed through the opening.

A cushion member is further provided. The cushion member is disposed between a peripheral edge part of an end face on which the terminal part is provided and the electrically conductive member. The cushion member surrounds the terminal part.

### Effects of the Invention

At least an embodiment of the invention makes it possible to provide a battery unit, etc. having improved waterproofness. It should be understood that the contents of the invention are not to be construed as being limited by the effects exemplified herein.

### Brief Description of Drawings

[FIG. 1] FIG. 1 is a sectional diagram of a lithium-ion battery according to an embodiment.
[FIG. 2] FIG. 2 is a perspective diagram of a battery unit according to an embodiment.
[FIG. 3] FIG. 3 is a diagram of the battery unit according to an embodiment, viewed from a side thereof.
[FIG. 4] FIG. 4 is a partially exploded perspective diagram of the battery unit according to an embodiment.
[FIG. 5] FIG. 5 is a perspective diagram of a first tab sheet assembly according to an embodiment, including a disassembled state thereof.
[FIG. 6] FIG. 6 is a perspective diagram of a second tab sheet assembly according to an embodiment, including a disassembled state thereof.
[FIG. 7] FIG. 7 is a diagram for describing a first cushion member according to an embodiment.
[FIG. 8] FIGs. 8A to 8C are each a diagram for describing the first cushion member according to an embodiment.
[FIG. 9] FIGs. 9A and 9B are respective diagrams for describing tabs according to an embodiment.
[FIG. 10] FIGs. 10A and 10B are respective diagrams for describing insulating films according to an embodiment.
[FIG. 11] FIGs. 11A and 11B are each a diagram illustrating a state in which the two insulating films are thermal-fusion-bonded to each other.
[FIG. 12] FIG. 12 is a diagram illustrating a section of a configuration illustrated in FIG. 11, taken along a line of section AA-AA.
[FIG. 13] FIG. 13 is a perspective diagram illustrating a state in which a cushion member and a tab sheet assembly are integrated with each other.
[FIG. 14] FIGs. 14A to 14D are each a diagram to be referred to when a description is given of a method of manufacturing the battery unit according to an embodiment.
[FIG. 15] FIGs. 15A and 15B are each a diagram to be referred to when the description is given of the method of manufacturing the battery unit according to an embodiment.
[FIG. 16] FIG. 16 is a diagram to be referred to when the description is given of the method of manufacturing the battery unit according to an embodiment.
[FIG. 17] FIGs. 17A and 17B are each a diagram to be referred to when the description is given of the method of manufacturing the battery unit according to an embodiment.
[FIG. 18] FIG. 18 is a diagram to be referred to when a description is given of specific examples of numerical values of the battery unit according to an embodiment.
[FIG. 19] FIG. 19 is a diagram to be referred to when the description is given of the specific examples of the numerical values of the battery unit according to an embodiment.
[FIG. 20] FIG. 20 is a diagram to be referred to when the description is given of the specific examples of the numerical values of the battery unit according to an embodiment.
[FIG. 21] FIG. 21 is a diagram for describing a modification.
[FIG. 22] FIG. 22 is a diagram for describing the modification.
[FIG. 23] FIG. 23 is a diagram for describing the modification.
[FIG. 24] FIG. 24 is a diagram for describing a modification.
[FIG. 25] FIG. 25 is a diagram for describing the modification.
[FIG. 26] FIG. 26 is a diagram for describing the modification.
[FIG. 27] FIGs. 27A and 27B are each a diagram for describing a modification.
[FIG. 28] FIGs. 28A and 28B are each a diagram for describing the modification.
[FIG. 29] FIGs. 29A and 29B are each a diagram for describing a modification.
[FIG. 30] FIGs. 30A and 30B are each a diagram for describing the modification.
[FIG. 31] FIG. 31 is a diagram for describing an application example of the invention.
[FIG. 32] FIG. 32 is a diagram for describing an application example of the invention.
[FIG. 33] FIG. 33 is a diagram for describing an application example of the invention.
[FIG. 34] FIG. 34 is a diagram for describing an application example of the invention.

### Modes for Carrying Out the Invention

Some embodiments, etc. of the invention are described below with reference to the drawings. The description is given in the following order.

### <Embodiment>

### <Modifications>

### <Application Examples>

The embodiment, etc. to be described below are preferred specific examples of the invention, and the contents of the invention are not limited to the embodiment, etc.

It should be noted that members recited in the claims are not limited to members in the embodiment. In particular, descriptions of dimensions, materials, shapes, relative positions, directions including, without limitation, up, down, left, and right, etc. of components in the embodiment are not intended to limit the scope of the invention thereto, unless otherwise noted, and are mere illustrative examples. Note that sizes, positional relationships, etc. of the members illustrated in each of the drawings may be exaggerated for clear descriptions. In addition, in order to avoid complicated illustration, only some of reference numerals may be illustrated, or some portions of the illustration may be simplified. Further, in the following description, the same terms or reference numerals indicate the same or identical members, and redundant descriptions will be omitted as appropriate. In addition, regarding elements included in the invention, multiple elements may be included in one member to allow the single member to serve as the multiple elements. In contrast, a function of a single member may be allocated to multiple members and achieved by the multiple members.

### <Embodiment>

Herein, a term "battery unit" is used to refer to one or multiple battery cells (unit cells) electrically coupled to each other by an electrically conductive member (a tab, which will be described later). In addition, a term "battery pack" is used to refer to a battery unit and a control board coupled thereto that are contained in an outer casing, in which a control integrated circuit (IC) that performs a protection operation, etc. is mounted on the control board.

### [Example of Battery]

First, a description is given of an example of a battery applicable to a battery unit according to the embodiment. In the embodiment, a lithium-ion battery 1 having a cylindrical shape is used as the battery. Needless to say, a battery other than the lithium-ion battery may be used as the battery.

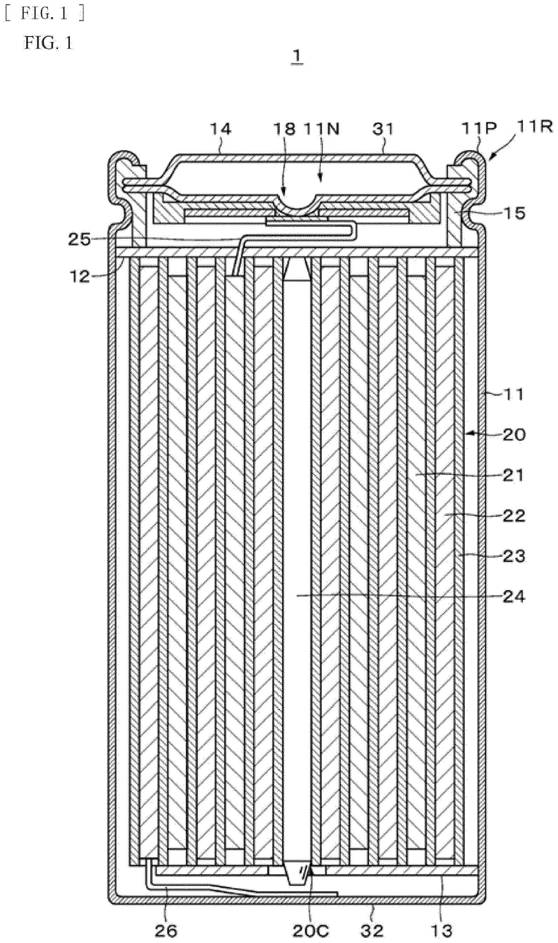

FIG. 1 is a schematic sectional diagram of the lithium-ion battery 1. The lithium-ion battery 1 includes a pair of insulating plates 12 and 13 and an electrode wound body 20 inside a battery can 11 having a cylindrical shape. The lithium-ion battery 1 may further include, inside the battery can 11, any one or more of devices and members including, without limitation, an unillustrated thermosensitive resistor (a positive temperature coefficient thermal-resistor or a PTC) and an unillustrated reinforcing member.

### (Battery Can)

The battery can 11 is a member that contains mainly the electrode wound body 20. The battery can 11 is a cylindrical container with one end part open and another end part closed. That is, the battery can 11 has one open end part (an open end part 11N). The battery can 11 includes any one or more of metal materials including, without limitation, iron, aluminum, and alloys thereof. The battery can 11 may have a surface plated with any one or more of metal materials including, without limitation, nickel.

### (Insulating Plate)

The insulating plates 12 and 13 are sheet-shaped plates each having a surface that is substantially perpendicular to a winding axis direction of the electrode wound body 20, i.e., a vertical direction in FIG. 1. The insulating plates 12 and 13 are so disposed as to allow the electrode wound body 20 to be interposed therebetween. The insulating plates 12 and 13 each include a material such as polyethylene terephthalate (PET), polypropylene (PP), or bakelite. Examples of bakelite include paper bakelite and cloth bakelite that are fabricated by applying a phenol resin to paper or cloth and thereafter heating the resultant.

### (Crimped Structure)

A battery cover 14 and a safety valve mechanism 18 are crimped to the open end part 11N of the battery can 11 via a gasket 15 to thereby provide a crimped structure 11R (a crimp structure). A crimped part 11P is provided at the top of the crimped structure 11R, i.e., at the top thereof in the vertical direction in FIG. 1. The crimped part 11P is also referred to as, for example, the top of the crimp part. The crimped structure 11R thus seals the battery can 11 in a state where the electrode wound body 20 and other components are contained inside the battery can 11.

### (Battery Cover)

The battery cover 14 is a member that closes the open end part 11N of the battery can 11 in the state where the electrode wound body 20 and the other components are contained inside the battery can 11. The battery cover 14 includes a material similar to the material included in the battery can 11. A middle region of the battery cover 14 protrudes in the vertical direction in FIG. 1. A region other than the middle region, i.e., a peripheral region, of the battery cover 14 is in contact with the safety valve mechanism 18.

### (Gasket)

The gasket 15 is a member that is mainly interposed between a portion around the crimped part 11P of the battery can 11 and the battery cover 14 to thereby seal a gap between the portion around the crimped part 11P and the battery cover 14. The gasket 15 may have a surface that is, for example, coated with a material such as asphalt.

The gasket 15 includes an insulating material. Although not particularly limited in kind, the insulating material is preferably a polymer material such as polybutylene terephthalate (PBT) or polypropylene (PP). A reason for this is that this makes it possible to sufficiently seal the gap between the portion around the crimped part 11P and the battery cover 14, while electrically separating the battery can 11 and the battery cover 14 from each other.

### (Safety Valve Mechanism)

The safety valve mechanism 18 cancels the sealed state of the battery can 11 and thereby releases a pressure inside the battery can 11, i.e., an internal pressure of the battery can 11 on an as-needed basis, mainly upon an increase in the internal pressure of the battery can 11. Examples of a cause of the increase in the internal pressure of the battery can 11 include a gas generated due to a decomposition reaction of an electrolytic solution during charging and discharging.

### (Electrode Wound Body)

In the lithium-ion battery 1 having the cylindrical shape, a positive electrode 21 having a band shape and a negative electrode 22 having a band shape are spirally wound with a separator 23 interposed therebetween, and are contained in the battery can 11 in a state of being impregnated with the electrolytic solution. The positive electrode 21 includes a positive electrode foil and a positive electrode active material layer provided on one side or each of both sides of the positive electrode foil, which is not illustrated. The negative electrode 22 includes a negative electrode foil and a negative electrode active material layer provided on one side or each of both sides of the negative electrode foil, which is not illustrated. The positive electrode foil includes a metal foil including, for example, aluminum or an aluminum alloy. The negative electrode foil includes a metal foil including, for example, nickel, a nickel alloy, copper, or a copper alloy. The separator 23 is a porous insulating film. The separator 23 electrically insulates the positive electrode 21 and the negative electrode 22 from each other, and allows for movement of lithium ions.

A space (a center space 20C) generated when the positive electrode 21, the negative electrode 22, and the separator 23 are wound is provided at the center of the electrode wound body 20, and a center pin 24 is disposed in the center space 20C. The center pin 24 may be omitted.

A positive electrode lead 25 is coupled to the positive electrode 21. A negative electrode lead 26 is coupled to the negative electrode 22. The positive electrode lead 25 includes an electrically conductive material such as aluminum. The positive electrode lead 25 is coupled to the safety valve mechanism 18, and is electrically coupled to the battery cover 14. Such a configuration allows a positive electrode terminal 31 to be provided at one end part of the lithium-ion battery 1. The negative electrode lead 26 includes an electrically conductive material such as nickel. The negative electrode lead 26 is coupled to, for example, the bottom of the battery can 11, and is electrically coupled to the battery can 11. Such a configuration allows a negative electrode terminal 32 to be provided at another end part of the lithium-ion battery 1. That is, the lithium-ion battery 1 is a battery including the positive electrode terminal 31 and the negative electrode terminal 32 as terminal parts. Note that the positive electrode terminal 31 and the negative electrode terminal 32 may be referred to as "terminal parts" as appropriate, when it is unnecessary to distinguish the positive electrode terminal 31 and the negative electrode terminal 32 from each other.

Applicable to the positive electrode 21, the negative electrode 22, and the separator 23 may be a positive electrode, a negative electrode, and a separator each including a publicly known material, respectively.

### [Configuration Example of Battery Unit]

### (Overall Configuration Example)

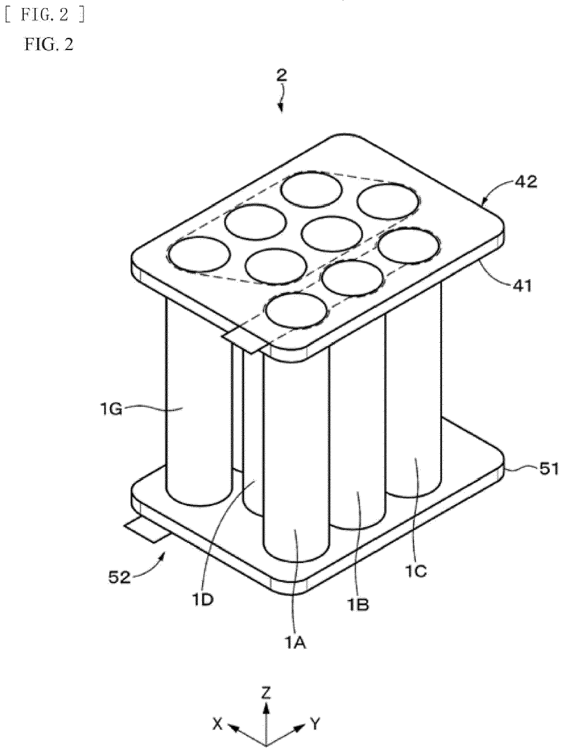

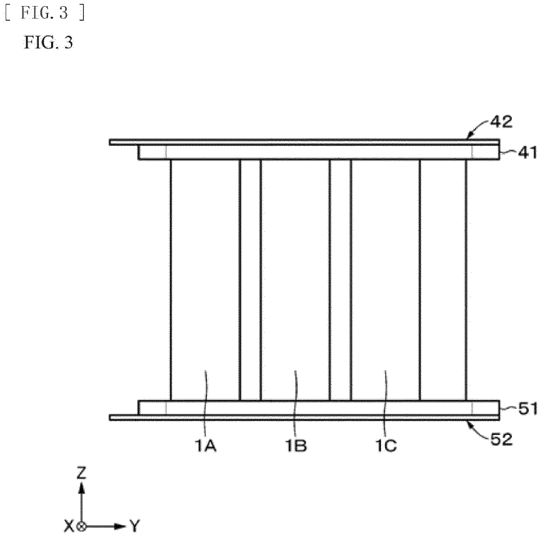

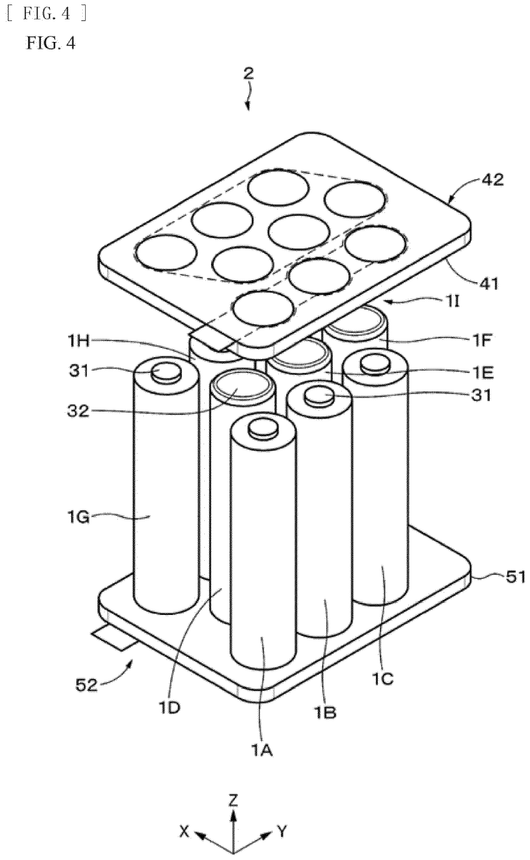

A description will be given next of a battery unit (a battery unit 2) including the above-described lithium-ion battery 1. FIG. 2 is a perspective diagram of the battery unit 2 according to the embodiment. FIG. 3 is a diagram of the battery unit 2 according to the embodiment, viewed from a side thereof. FIG. 4 is a partially exploded perspective diagram of the battery unit 2 according to the embodiment.

An X-axis, a Y-axis, and a Z-axis in the embodiment are orthogonal to each other. The X-axis and the Y-axis are axes on a predetermined plane, and the Z-axis is an axis orthogonal to the predetermined plane. In the following, the description is given, regarding a height direction of the lithium-ion battery 1 as the Z-axis.

The battery unit 2 includes nine lithium-ion batteries (lithium-ion batteries 1A to 1I), a first cushion member 41, a first tab sheet assembly 42, a second cushion member 51, and a second tab sheet assembly 52. As illustrated in FIG. 3, the battery unit 2 has a general configuration in which the first cushion member 41 and the first tab sheet assembly 42 are disposed on one terminal side of the lithium-ion batteries 1, and the second cushion member 51 and the second tab sheet assembly 52 are disposed on another terminal side of the lithium-ion batteries 1. Note that the lithium-ion batteries are collectively referred to as the lithium-ion batteries 1 as appropriate, when it is unnecessary to distinguish the lithium-ion batteries from each other.

### (Arrangement of Lithium-Ion Batteries)

The nine lithium-ion batteries 1 are disposed in three rows in an X-axis direction, and each of the three rows includes three batteries disposed in one line in a Y-axis direction. The nine lithium-ion batteries 1 are electrically coupled to each other via tabs which will be described later. As illustrated in FIG. 4, the lithium-ion batteries 1A to 1C disposed on the frontmost side in the X-axis direction, that is, closest to the origin, are so disposed that the positive electrode terminals 31 are on an upper side in a Z-axis direction. The lithium-ion batteries 1D to 1F adjacent to the lithium-ion batteries 1A to 1C are so disposed that the negative electrode terminals 32 are on the upper side in the Z-axis direction. The lithium-ion batteries 1G to 1I adjacent to the lithium-ion batteries 1D to 1F are so disposed that the positive electrode terminals 31 are on the upper side in the Z-axis direction.

Of the nine lithium-ion batteries 1, the three lithium-ion batteries 1A to 1C disposed in the Y-axis direction are coupled in series to each other; the three lithium-ion batteries 1D to 1F disposed in the Y-axis direction are coupled in series to each other; and the three lithium-ion batteries 1G to 1I disposed in the Y-axis direction are coupled in series to each other. The sets, in each of which the three lithium-ion batteries are coupled in series to each other, are coupled in parallel to each other. That is, in the embodiment, the nine lithium-ion batteries 1 are coupled in three-series and three-parallel. Note that the nine lithium-ion batteries 1 are electrically coupled to each other by respective tabs included in the first tab sheet assembly 42 and the second tab sheet assembly 52.

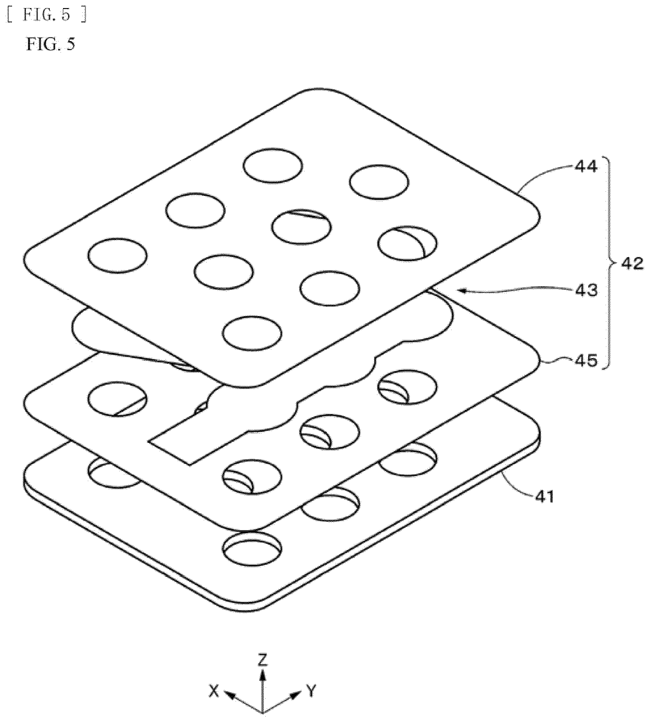

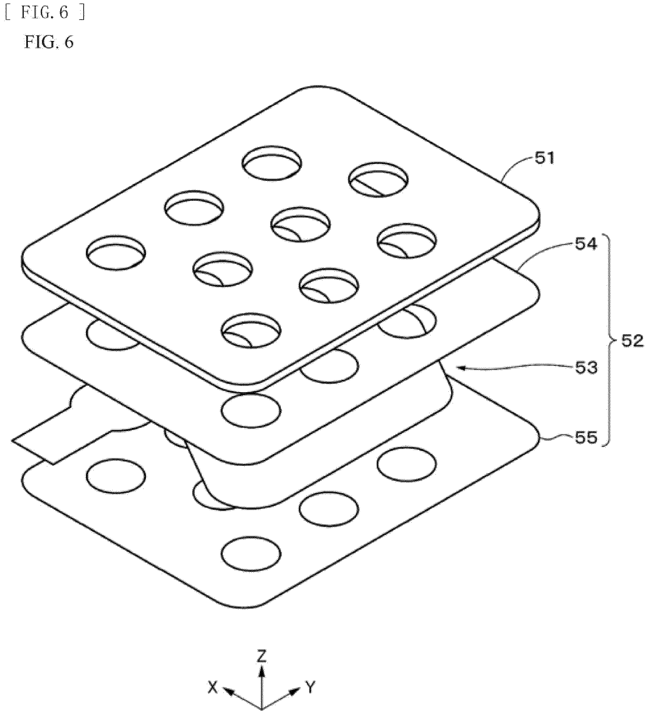

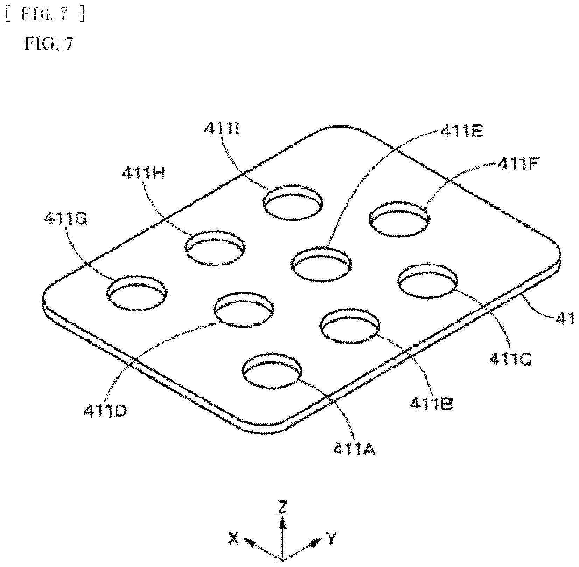

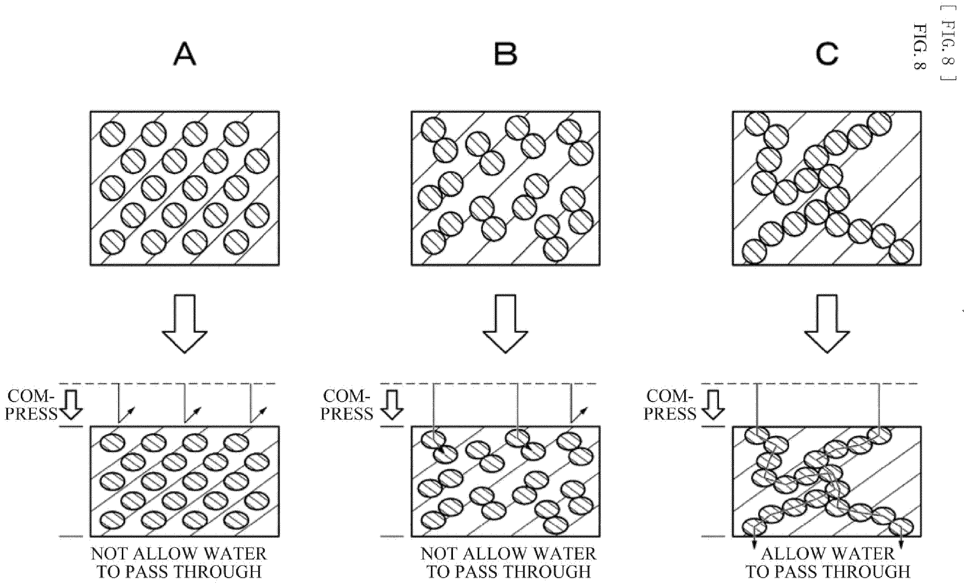

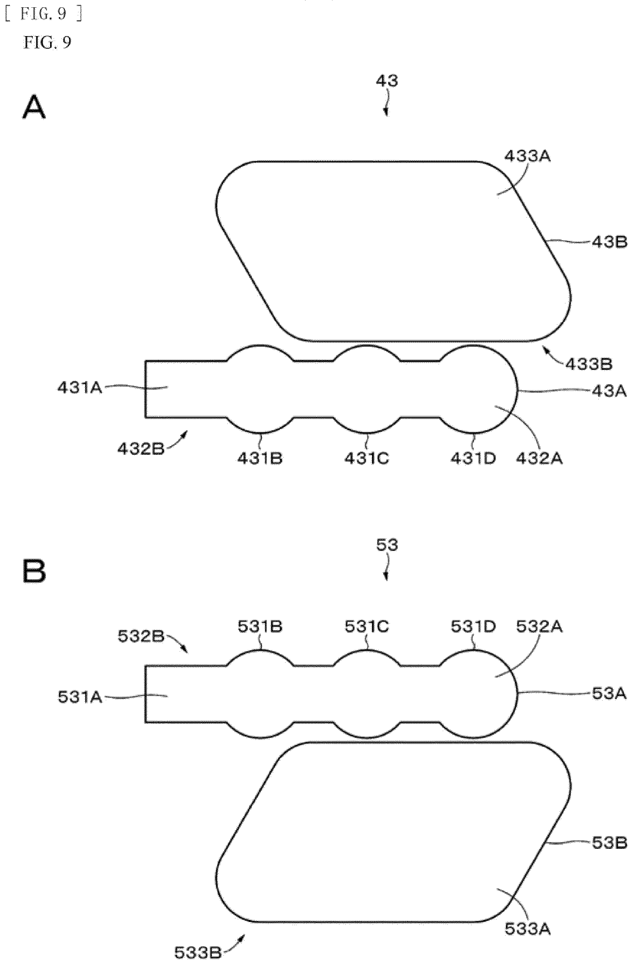

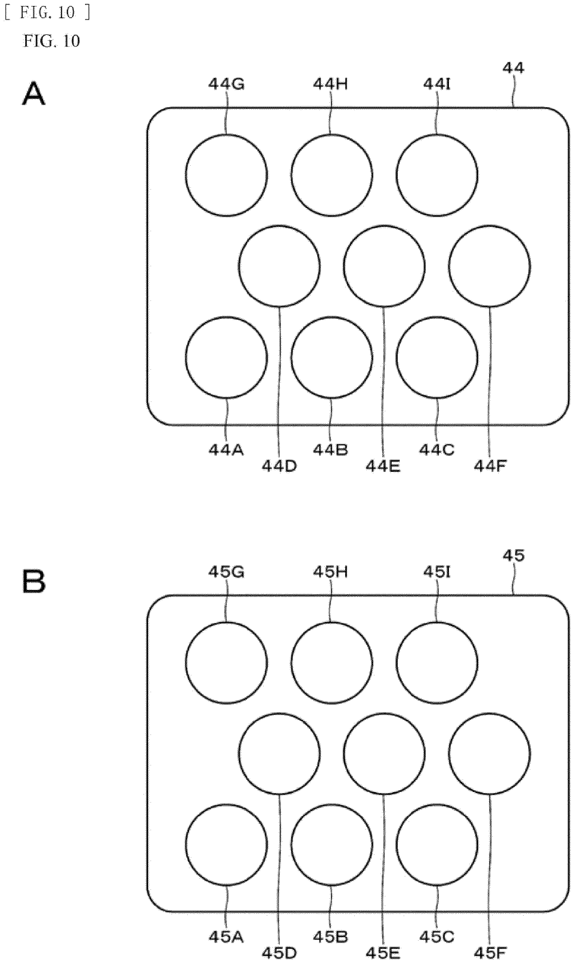

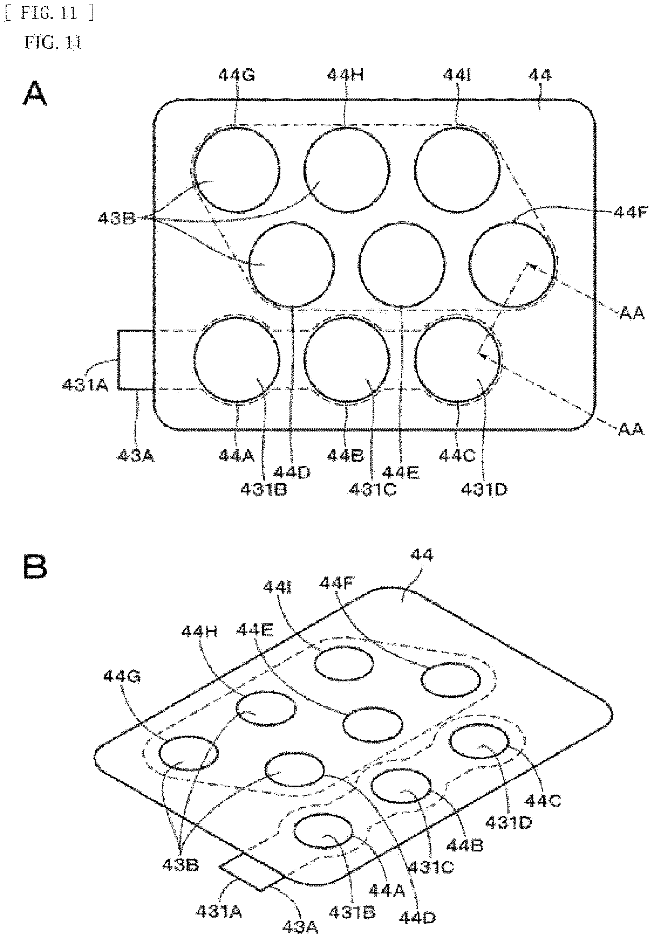

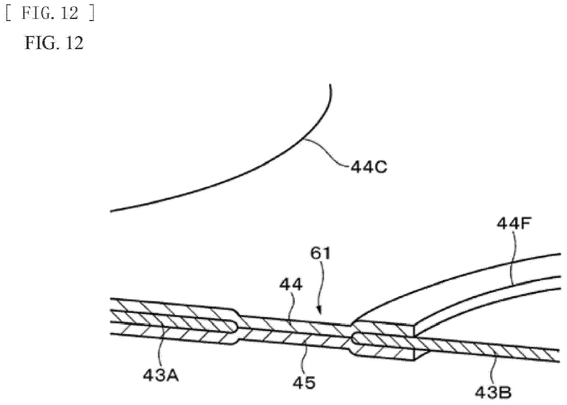

A configuration example of the battery unit 2 is further described in detail, with reference to FIGs. 5 to 12. FIG. 5 is a perspective diagram of the first tab sheet assembly 42 according to the embodiment, including a disassembled state thereof. FIG. 6 is a perspective diagram of the second tab sheet assembly 52 according to the embodiment, including a disassembled state thereof. FIG. 7 is a diagram for describing the first cushion member according to the embodiment. FIGs. 8A to 8C are each a diagram for describing the first cushion member according to the embodiment. FIGs. 9A and 9B are respective diagrams for describing tabs according to the embodiment. FIGs. 10A and 10B are respective diagrams for describing insulating films according to the embodiment. FIGs. 11A and 11B are each a diagram illustrating a state in which the two insulating films are thermal-fusion-bonded to each other. FIG. 12 is a diagram illustrating a section of a configuration illustrated in FIG. 11, taken along a line of section AA-AA.

### (Cushion Member)

First, the first cushion member 41 will be described. Note that the contents of the following description are also applicable to the second cushion member 51. Needless to say, it is not intended to exclude a difference in configuration between the first cushion member 41 and the second cushion member 51 within a range not departing from the gist of the invention.

As illustrated in FIG. 7, in a front view, the first cushion member 41 is a thin plate-shaped member with a peripheral edge having a substantially rectangular shape. The first cushion member 41 has hole parts the number of which corresponds to the number of the lithium-ion batteries 1, i.e., nine hole parts (hole parts 411A to 41I) on an inner side of the peripheral edge. Note that the hole parts are referred to as hole parts 411 as appropriate, when it is unnecessary to distinguish the hole parts from each other. Each of the hole parts 411A to 411I is provided at a position where the terminal part of the corresponding one of the lithium-ion batteries 1 is to be exposed. For example, the hole part 411A is provided at a position where the positive electrode terminal 31 of the lithium-ion battery 1A is to be exposed.

The first cushion member 41 is preferably a foam having waterproofness. As a cushion member having waterproofness, a rubber material such as silicone rubber or chloroprene rubber may be typically used. As will be described in detail later, the first cushion member 41 is compressed when the tab and the terminal parts are welded to each other. Because the material such as the silicone rubber is too hard and has too much repulsive force, the use of the material such as the silicone rubber increases a possibility that a welding failure occurs. In addition, because the rubber material such as the silicone rubber has a great specific gravity, the use of the rubber material such as the silicone rubber increases the total weight of the battery unit 2. From these viewpoints, the first cushion member 41 is preferably the foam having the waterproofness.

More preferably, the first cushion member 41 is preferably a foam of a closed-cell structure or a foam of a semi-closed-cell structure. The closed-cell structure is, as illustrated in FIG. 8A, a structure in which multiple cells (each of which is schematically illustrated as a circle) present inside a member are independent of each other. The semi-closed-cell structure is, as illustrated in FIG. 8B, a structure in which multiple cells present inside a member are basically independent of each other but some of the cells are connected to each other. In contrast, an open-cell structure is, as illustrated in FIG. 8C, a structure in which substantially all of multiple cells present inside a member are connected to each other.

The foam of the closed-cell structure or the foam of the semi-closed-cell structure has a property that, even when the foam is applied with a pressure from one surface and compressed, prevents a liquid such as moisture to pass therethrough to another surface side. In contrast, the foam of the open-cell structure has a property that, when the foam is applied with a pressure from one surface and compressed, allows a liquid such as moisture to pass therethrough to another surface side. A kind of a structure of a foam is determinable, for example, by checking, when moisture is dropped on one surface of the foam and a pressure is thereafter applied to the foam, whether the moisture permeates to another surface. If the moisture does not permeate, the foam is of the closed-cell structure or the semi-closed-cell structure. If the moisture permeates, the foam is of the open-cell structure.

### (Tab Sheet Assembly)

Next, the tab sheet assembly will be described. As illustrated in FIG. 5, the first tab sheet assembly 42 includes the tab 43, the insulating film 44, and the insulating film 45. Schematically describing, these members are disposed in order of the insulating film 45, the tab 43, and the insulating film 44 on a top surface of the first cushion member 41.

As illustrated in FIG. 6, the second tab sheet assembly 52 includes the tab 53, an insulating film 54, and an insulating film 55. Schematically describing, these members are disposed in order of the insulating film 54, the tab 53, and the insulating film 55 on a bottom surface of the second cushion member 51. The tab 43 and the tab 53 are each an example of the electrically conductive member to be electrically coupled to the terminal part of the lithium-ion battery 1. [Tab]

Next, the tab 43 and the tab 53 will be described. The tab 43 and the tab 53 each include, for example, a metal material such as aluminum (Al), copper (Cu), nickel (Ni), or stainless steel.

As illustrated in FIG. 9A, the tab 43 includes a tab 43A and a tab 43B. The tab 43A includes a led-out part 431A at an end part thereof, and also includes three circular parts 431B, 431C, and 431D linearly arranged in order from the led-out part 431A. The tab 43B is a tab having a parallelogram shape. The tab 43A includes a top surface 432A and a bottom surface 432B. The tab 43B includes a top surface 433A and a bottom surface 433B. As illustrated in FIG. 4, the circular part 431B of the tab 43A is welded to the positive electrode terminal 31 of the lithium-ion battery 1A. The circular part 431C of the tab 43A is welded to the positive electrode terminal 31 of the lithium-ion battery 1B. The circular part 431D of the tab 43A is welded to the positive electrode terminal 31 of the lithium-ion battery 1C. In addition, respective appropriate portions of the tab 43B are welded to the negative electrode terminals 32 of the lithium-ion batteries 1D to 1F and the positive electrode terminals 31 of the lithium-ion batteries 1G to 1I. The welding described above may be performed by, for example, resistance welding in which each of the bottom surface 432B and the bottom surface 433B is welded to the terminal part by pressing a welding rod against the top surface 432A of the tab 43A and the top surface 433A of the tab 43B, and supplying a current to the welding rod. The resistance welding leaves a resistance welding mark on each of the top surface 432A of the tab 43A and the top surface 433A of the tab 43B.

As illustrated in FIG. 9B, the tab 53 includes a tab 53A and a tab 53B. The tab 53A includes a led-out part 531A at an end part thereof, and also includes three circular parts 531B, 531C, and 531D linearly arranged in order from the led-out part 531A. The tab 53B is a tab having a parallelogram shape. The tab 53A includes a top surface 532A and a bottom surface 532B. The tab 53B includes a top surface 533A and a bottom surface 533B. As illustrated in FIG. 4, the circular part 531B of the tab 53A is welded to the negative electrode terminal 32 of the lithium-ion battery 1G. The circular part 531C of the tab 53A is welded to the negative electrode terminal 32 of the lithium-ion battery 1H. The circular part 531D of the tab 53A is welded to the negative electrode terminal 32 of the lithium-ion battery 1I. In addition, respective appropriate portions of the tab 53B are welded to the negative electrode terminals 32 of the lithium-ion batteries 1A to 1C and the positive electrode terminals 31 of the lithium-ion batteries 1D to 1F. The welding described above may be performed by, for example, resistance welding in which each of the top surface 532A and the top surface 533A is welded to the terminal part by pressing a welding rod against the bottom surface 532B of the tab 53A and the bottom surface 533B of the tab 53B, and supplying a current to the welding rod. The resistance welding leaves a resistance welding mark on each of the bottom surface 532B of the tab 53A and the bottom surface 533B of the tab 53B.

The led-out part 431A is electrically coupled to a positive electrode output terminal of a battery pack including the battery unit 2. The led-out part 531A is electrically coupled to a negative electrode output terminal of the battery pack including the battery unit 2.

As described above, the tab 43 and the tab 53 according to the embodiment each have a shape with no opening.

In the embodiment, surfaces of the tab 43 and the tab 53 on an outer side each correspond to a first major surface, and surfaces thereof on an inner side each correspond to a second major surface. Specifically, the top surface 432A, the top surface 433A, the bottom surface 532B, and the bottom surface 533B each correspond to an example of the first major surface. The bottom surface 432B, the bottom surface 433B, the top surface 532A, and the top surface 533A each correspond to an example of the second major surface.

### [Insulating Film]

Next, the insulating films 44 and 45 will be described with reference to FIG. 10. Note that the contents of the following description are also applicable to the insulating films 54 and 55. Needless to say, it is not intended to exclude a difference in configuration between the insulating films 44 and 45 and the insulating films 54 and 55 within a range not departing from the gist of the invention.

The insulating films 44 and 45 are each, for example, a thermal-fusion-bonding film including polyethylene terephthalate (PET). The insulating film 44 and the insulating film 45 each have openings the number of which corresponds to the number of the lithium-ion batteries 1. For example, the insulating film 44 has nine openings 44A to 44I. The insulating film 45 has nine openings 45A to 45I provided at substantially the same positions as the openings 44A to 44I, respectively. The openings 44A to 44I and the openings 45A to 45I are so provided that the positions of the openings 44A to 44I are substantially the same as the positions of the hole parts 411A to 41I of the first cushion member 41 in the Z-axis direction, respectively, and the positions of the openings 45A to 45I are substantially the same as the positions of the hole parts 411A to 41I of the first cushion member 41 in the Z-axis direction, respectively.

As illustrated in FIG. 5, the insulating film 44 is disposed on a top surface side of the tab 43, and the insulating film 45 is disposed on a bottom surface side of the tab 43. As illustrated in FIG. 6, the insulating film 54 is disposed on a top surface side of the tab 53, and the insulating film 55 is disposed on a bottom surface side of the tab 53. That is, in the embodiment, the insulating films 44 and 55 each correspond to an example of a first insulating film, and the insulating films 45 and 54 each correspond to an example of a second insulating film.

The insulating films 44 and 45 are thermal-fusion-bonded to each other with the tabs 43A and 43B interposed therebetween at respective predetermined positions. FIGs. 11A and 11B each illustrate a state in which the insulating films 44 and 45 are thermal-fusion-bonded to each other. The circular part 431B of the tab 43A is exposed to an outside through the opening 44A of the insulating film 44 (and the opening 45A of the insulating film 45 on the opposite side). The circular part 431C of the tab 43A is exposed to the outside through the opening 44B of the insulating film 44 (and the opening 45B of the insulating film 45 on the opposite side). The circular part 431D of the tab 43A is exposed to the outside through the opening 44C of the insulating film 44 (and the opening 45C of the insulating film 45 on the opposite side). In addition, the tab 43B is exposed to the outside through the openings 44D to 44I of the insulating film 44 (and the openings 45D to 45I of the insulating film 45 on the opposite side).

Although not illustrated, the tab 53B is exposed to the outside through the openings of the insulating films 54 and 55 (i.e., the openings at positions corresponding to the positions of the openings 44A to 44F and the openings 45A to 45F). The tab 53A is exposed to the outside through the openings of the insulating films 54 and 55 (i.e., the openings at positions corresponding to the positions of the openings 44G to 44I and the openings 45G to 45I).

FIG. 12 is a diagram illustrating a section of the configuration illustrated in FIG. 11, taken along a line of section AA-AA. As illustrated in FIG. 12, in a portion where neither the tab 43A nor the tab 43B is interposed, the insulating films 44 and 45 are thermal-fusion-bonded to each other. Thus, a sealing part 61 is formed as a result of the thermal fusion bonding.

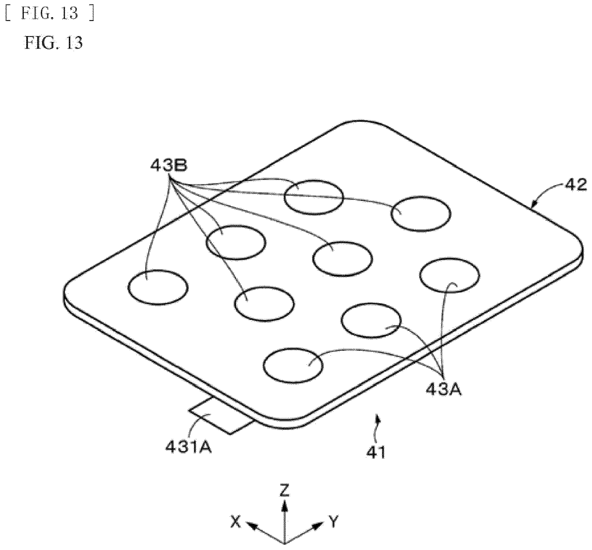

Adhering the first tab sheet assembly 42 described above to the top surface of the first cushion member 41 using an adhesive or a double-sided tape allows the first tab sheet assembly 42 and the first cushion member 41 to be integrated with each other, and as a result, an integrated body is formed, as illustrated in FIG. 13. This similarly applies to the second tab sheet assembly 52 and the second cushion member 51.

### [Method of Manufacturing Battery Unit]

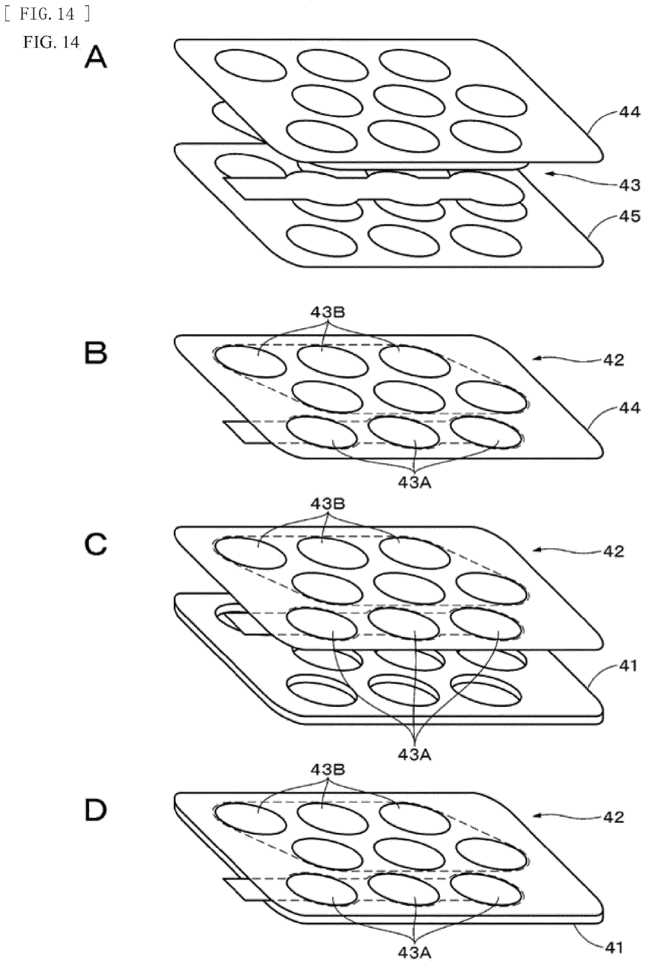

Next, a description is given of an example of a method of manufacturing the above-described battery unit 2, with reference to FIGs. 14 to 17.

As illustrated in FIG. 14A, the tab 43 (the tab 43A and the tab 43B in this example) is disposed between the insulating films 44 and 45. For example, the components are so disposed that each of the openings of the insulating film 44 and corresponding one of the openings of the insulating film 45 are opposed to each other, and the tab 43 is present between the opposed openings.

Thereafter, as illustrated in FIG. 14B, the insulating film 44 and the insulating film 45 are thermal-fusion-bonded to each other. As a result, the first tab sheet assembly 42 is formed in which the insulating films 44 and 45 and the tab 43 are integrated with each other.

Thereafter, as illustrated in FIG. 14C, the first tab sheet assembly 42 is adhered to the top surface of the first cushion member 41 using a double-sided tape. As a result, as illustrated in FIG. 14D, the first cushion member 41 and the first tab sheet assembly 42 are integrated with each other. The second tab sheet assembly 52 is formed in a similar manner, and is integrated with the second cushion member 51.

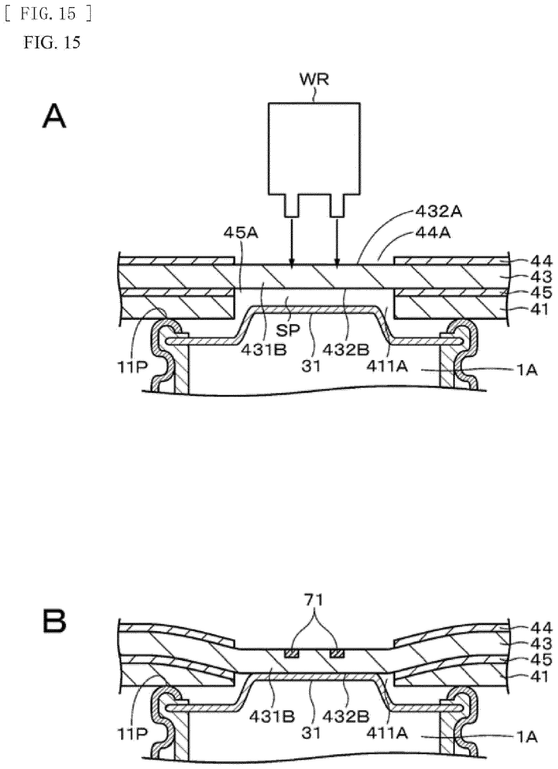

Thereafter, the tab 43 and the terminal parts of the lithium-ion batteries 1 are welded to each other. In addition, the tab 53 and the terminal parts of the lithium-ion batteries 1 are welded to each other. A specific welding method will be described, with reference to FIGs. 15A and 15B. FIGs. 15A and 15B each illustrate an example of welding the circular part 431B of the tab 43A and the positive electrode terminal 31 of the lithium-ion battery 1A to each other. Note that in FIGs. 15A and 15B, the configuration around the positive electrode terminal 31 is simplified as appropriate.

For example, the above-described integrated body including the first cushion member 41 and the first tab sheet assembly 42 is disposed on a peripheral edge part of an end face, of the lithium-ion battery 1A, on which the terminal part (the positive electrode terminal 31 in this example) is provided. As a result, the first cushion member 41, the insulating film 45, the tab 43, and the insulating film 44 are disposed in order on the peripheral edge part of the end face, of the lithium-ion battery 1A, on which the positive electrode terminal 31 is provided. When the terminal part is the positive electrode terminal 31, the peripheral edge part of the end face is the crimped part 11P formed by crimping the battery can 11 that is an outer package of the lithium-ion battery 1A.

When the integrated body including the first cushion member 41 and the first tab sheet assembly 42 is disposed, the tab 43 (specifically, the circular part 431B of the tab 43A) and the positive electrode terminal 31 of the lithium-ion battery 1A are opposed to each other with a clearance SP therebetween, as illustrated in FIG. 15A.

Thereafter, a welding rod WR is brought into contact with a portion, of the tab 43A, on an opposite side to a side opposed to the positive electrode terminal 31, i.e., the top surface 432A of the circular part 431B of the tab 43A, and is pressed into the portion, to thereby deform the circular part 431B. Stress caused by pressing in the welding rod WR is transmitted to the first cushion member 41, which compresses the first cushion member 41. Pressing in the welding rod WR while compressing the first cushion member 41 brings a portion around the circular part 431B of the tab 43A and the positive electrode terminal 31 into contact with each other. Supplying a current to the welding rod WR in such a contact state allows the portion around the circular part 431B of the tab 43A and the positive electrode terminal 31 to be welded to each other, as illustrated in FIG. 15B. In such a welded state, the first cushion member 41 is disposed, surrounding the positive electrode terminal 31, between the peripheral edge part (the crimped part 11P in this example) of the end face on which the positive electrode terminal 31 is provided and the tab 43. In addition, the first cushion member 41 is sandwiched between the crimped part 11P and the tab 43. Specifically, the first cushion member 41 is sandwiched between the crimped part 11P and the tab 43, with an opening peripheral edge of the hole part 411A of the first cushion member 41 being compressed. Further, a resistance welding mark 71 is formed on the top surface 432A of the circular part 431B.

Note that although the welding method is not limited to a particular method, a method using resistance welding as in the embodiment is preferable. A reason for this is that applying a pressure by the welding rod WR makes it possible to weld the tab 43 and the positive electrode terminal 31 to each other while compressing the first cushion member 41. Another possible welding method may be ultrasonic welding. However, the ultrasonic welding involves sandwiching with jigs called an anvil and a horn and oscillating, which is unsuitable for the embodiment because it is difficult to insert the anvil into the clearance SP. Still another possible welding method may be a projection welding method. However, in this method, a tab is to have a gap adapted to allow a reactive current to flow between portions to be welded, which increases a possibility that moisture enters from the gap after welding. This makes it difficult to achieve an object of waterproofing around a battery terminal. Therefore, the projection welding method is unsuitable. Accordingly, the resistance welding is preferable as the welding method.

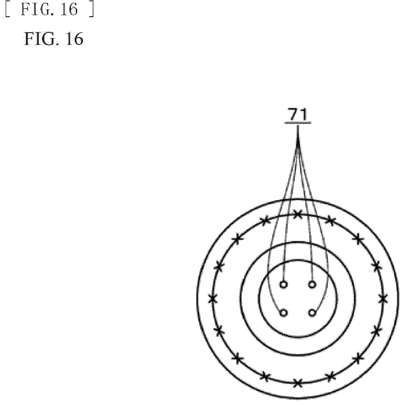

The welding rod WR includes two respective protrusions corresponding to positive and negative polarities. For example, resistance welding is performed twice on one welding location. This forms two pairs of resistance welding marks 71 at one welding location, as schematically illustrated in FIG. 16. The deformation of the tab 43 at the time of welding generates stress concentrically about a welding point (i.e., the location with the resistance welding marks 71). In FIG. 16, a portion in which the stress is generated is schematically indicated by "×". Thus, the first cushion member 41 comes into firm contact with portions on the upper and lower sides thereof while being compressed, which makes it possible to prevent moisture from entering the positive electrode terminal 31.

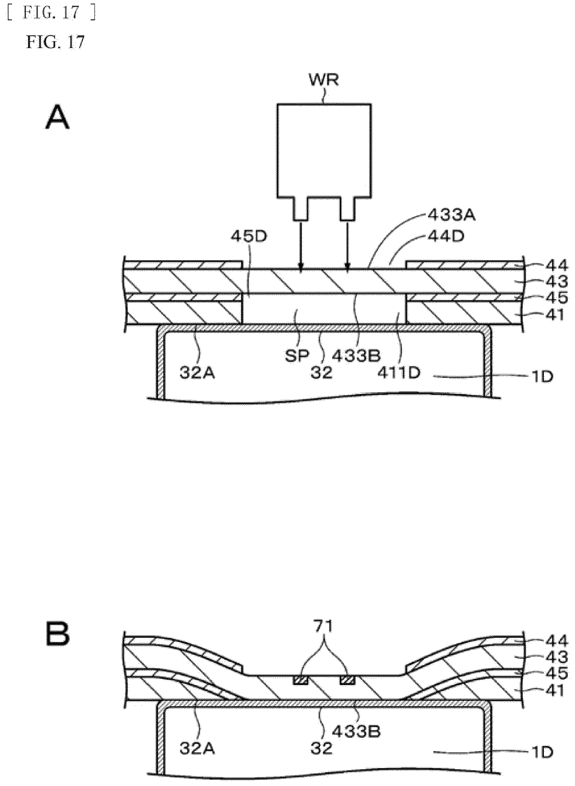

A specific welding method will be described, with reference to FIGs. 17A and 17B. FIGs. 17A and 17B each illustrate an example of welding a predetermined portion of the tab 43B and the negative electrode terminal 32 of the lithium-ion battery 1D to each other. Note that in FIGs. 17A and 17B, the configuration around the negative electrode terminal 32 is simplified as appropriate.

For example, the above-described integrated body including the first cushion member 41 and the first tab sheet assembly 42 is disposed on a peripheral edge part of an end face of the lithium-ion battery 1D on which the terminal part (the negative electrode terminal 32 in this example) is provided. As a result, the first cushion member 41, the insulating film 45, the tab 43, and the insulating film 44 are disposed in order on the peripheral edge part (a peripheral edge part 32A) of the end face of the lithium-ion battery 1D on which the negative electrode terminal 32 is provided. When the terminal part is the negative electrode terminal 32, the peripheral edge part 32A of the end face is, for example, a flat portion in which an insulating tape is attached to an outer package of the lithium-ion battery 1D.

When the integrated body including the first cushion member 41 and the first tab sheet assembly 42 is disposed, the tab 43 (specifically, the tab 43B) and the negative electrode terminal 32 of the lithium-ion battery 1D are opposed to each other with the clearance SP therebetween, as illustrated in FIG. 17A.

Thereafter, the welding rod WR is brought into contact with a portion, of the tab 43B, on an opposite side to a side opposed to the negative electrode terminal 32 and is pressed into the portion, to thereby deform the tab 43B. Stress caused by pressing in the welding rod WR is transmitted to the first cushion member 41, which compresses the first cushion member 41. Pressing in the welding rod WR while compressing the first cushion member 41 brings a portion of the tab 43B and the negative electrode terminal 32 into contact with each other. Supplying a current to the welding rod WR in such a contact state allows the portion of the tab 43B and the negative electrode terminal 32 to be welded to each other, as illustrated in FIG. 17B. In such a welded state, the first cushion member 41 is disposed, surrounding the negative electrode terminal 32, between the peripheral edge part 32A of the end face on which the negative electrode terminal 32 is provided and the tab 43. In addition, the first cushion member 41 is sandwiched between the peripheral edge part 32A and the tab 43. Specifically, the first cushion member 41 is sandwiched between the peripheral edge part 32A and the tab 43, with an opening peripheral edge of the hole part 411D of the first cushion member 41 being compressed. Further, the resistance welding mark 71 is formed on the top surface 433A of the tab 43B.

Note that although not illustrated, welding is performed in a similar manner on other portions. A process of manufacturing the second tab sheet assembly 52 and a process of welding the tab 53 are also performed in a similar manner. As described above, the battery unit 2 is completed.

### [Specific Examples of Numerical Values]

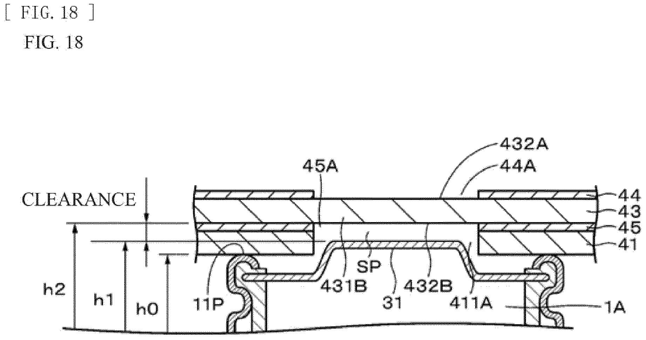

Now, specific examples of numerical values of the battery unit 2 will be described. First, a specific example of a size of the clearance will be described. A length of the clearance (a length in the Z-axis direction) is defined as illustrated in FIG. 18. A length from a portion, of the bottom surface of the tab 43, that is not coupled to the terminal part (the positive electrode terminal 31 in the illustrated example) to the positive electrode terminal 31 is defined as the length of the clearance. Note that FIG. 18 illustrates a state before welding. In a case after the welding, a portion having a length described below is defined based on a portion not deformed by the welding.

Specifically, assume that a length of a bottom surface from any reference position, such as the bottom of the battery can 11, to the crimped part 11P is h0; a height of the lithium-ion battery 1 from the reference position, such as the bottom of the battery can 11, is h1; and a height of the bottom surface (a welding surface to be welded) of the tab 43 from the reference position, such as the bottom of the battery can 11, is h2. Note that the reference position is not necessarily the bottom of the battery can 11, and may be the middle of the battery can 11.

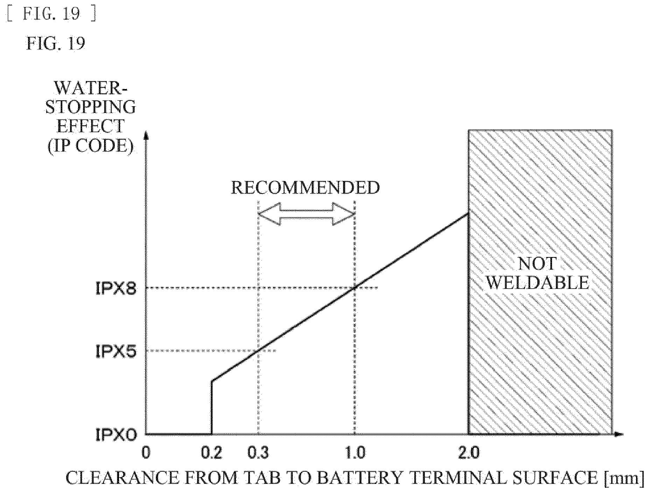

As an index of waterproofness or a water-stopping property, an IP code of IEC standards is used for evaluation. The last number of the IP code corresponds to the index of waterproofness. As illustrated in FIG. 19, the embodiment is at a level of achieving waterproofness of higher than or equal to IPX5 when the clearance is greater than or equal to 0.3 mm, and achieving waterproofness of higher than or equal to IPX8 when the clearance is greater than or equal to 1.0 mm. A typical battery unit usable outdoor is to have a waterproofness level within a range from IPX5 to IPX8 both inclusive. Accordingly, the length of the clearance is preferably greater than or equal to 0.3 mm. Meanwhile, when the clearance is greater than or equal to 2.0 mm, it is difficult to sufficiently compress the cushion member by pressure application in resistance welding and to bring the welding surface into contact with the terminal part, i.e., to perform welding. Therefore, the length of the clearance is preferably greater than or equal to 0.3 mm and less than 2.0 mm. When the length of the clearance is greater than or equal to 1.0 mm, although welding is performable, a possibility that welding failure occurs increases. Therefore, the length of the clearance is more preferably greater than or equal to 0.3 mm and less than 1.0 mm.

Specific numerical examples are described below.
Thickness of insulating film = 0.05 mm to 0.10 mm
Thickness of tab = 0.15 mm to 0.20 mm
Thickness of cushion member = 0.50 mm to1.50 mm
h0 = 64.90 mm
h1 = 65.00 mm

Because h2 is expressible as "h0 + thickness of cushion member + thickness of insulating film", the following holds.
Minimum value of h2 = 64.90 + 0.50 + 0.05 = 65.45 mm
Maximum value of h2 = 64.90 + 1.50 + 0.10 = 66.50 mm

The maximum value of the length of the clearance is expressible by a difference between the maximum value of h2 and h1.

The minimum value of the length of the clearance is expressible by a difference between the minimum value of h2 and h1.

Therefore, the following holds.
Minimum value of length of clearance = 65.45 - 65.00 = 0.45 mm
Maximum value of length of clearance = 66.50 - 65.00 = 1.50 mm

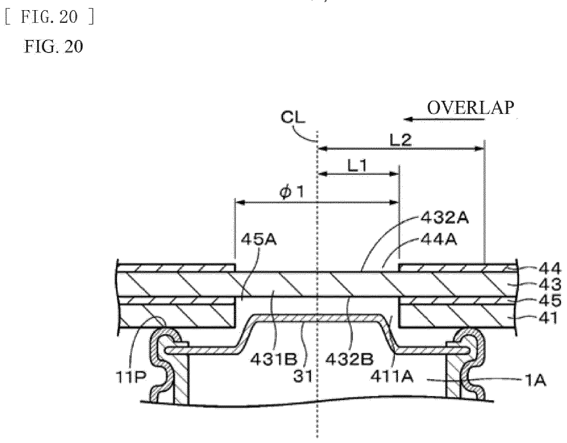

Next, an example of the size of the cushion member will be described. As illustrated in FIG. 20, L2 that is 1/2 of an outer diameter of the lithium-ion battery 1 is set to be greater than a length L1 from a center line CL of the lithium-ion battery 1 to an end face of the hole part of the cushion member (e.g., the first cushion member 41), and is so set that the cushion member and the battery can overlap. A reason for this is that, without such overlapping, it is difficult to obtain a waterproof function from compression of the cushion member.

Specific examples of numerical values are described below.
1/2 (L2) of outer diameter of lithium-ion battery 1 = ϕ18/2 = 9.00 mm
Diameter ϕ1 of hole part of cushion member = 10.00 mm
L1 from center line CL of lithium-ion battery 1 = 9.00 - 10.00/2 = 4.00 mm
Overlapping amount = L2 - L1 = 9.00 - 4.00 = 5.00 mm

According to the battery unit of the embodiment described above, the cushion member is disposed, surrounding the periphery (360°) of the terminal part while being compressed when the tab is welded. This makes it possible to effectively prevent moisture, etc. from entering the periphery of the terminal part. It is therefore possible to improve waterproofness of the battery unit.

In addition, the cushion member includes the foam of the closed-cell structure or the foam of the semi-closed-cell structure. This makes it possible to prevent moisture from passing through. It is therefore possible to prevent migration from occurring.

In addition, the tab has a configuration with no opening. This makes it possible to prevent moisture from entering the periphery of the terminal part via the opening of the tab as in the case with the existing tab.

In addition, it is unnecessary to dispose a waterproof member for each of the lithium-ion batteries. Accordingly, there is no possibility of misalignment of the waterproof member. In addition, it is possible to reduce the number of assembly processes.

### <Modifications>

Although the embodiment of the invention has been described in detail above, the contents of the invention are not limited to the embodiment described above, and various modifications may be made based on the technical idea of the invention. In the following, some modifications will be described. Note that configurations similar to those in the embodiment are denoted by the same reference numerals, and redundant descriptions thereof will be omitted as appropriate.

### [Modification 1]

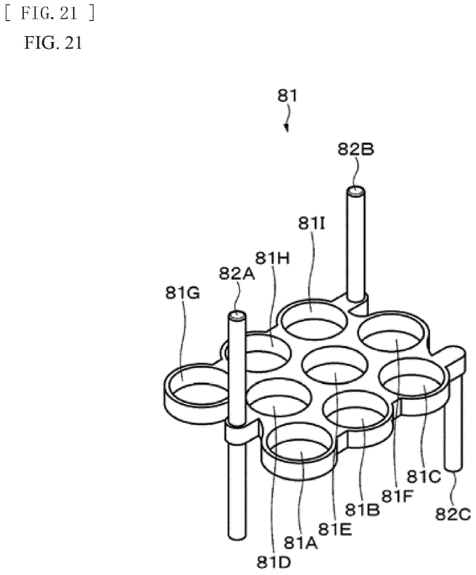

The battery unit 2 may include a battery holder that insulates, houses, and holds the lithium-ion battery 1. FIG. 21 illustrates a battery holder (a battery holder 81) according to Modification 1. The battery holder 81 has hole parts 81A to 81I that, for example, house the respective nine lithium-ion batteries 1. For example, the hole part 81A houses and holds a portion near the middle of a body part of the lithium-ion battery 1A. In a similar manner, other hole parts each house and hold a portion near the middle of a body part of corresponding one of the lithium-ion batteries.

In addition, the battery holder 81 includes three pins 82A, 82B, and 82C. The pins 82A and 82B each extend upward and downward with respect to a surface, of the battery holder 81, where the hole parts are provided. The pin 82C extends downward with respect to the surface, of the battery holder 81, where the hole parts are provided.

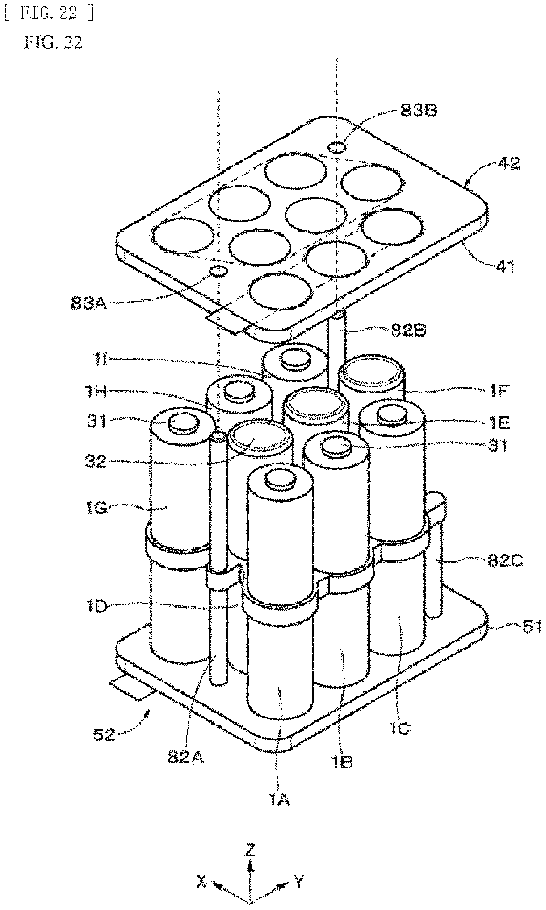

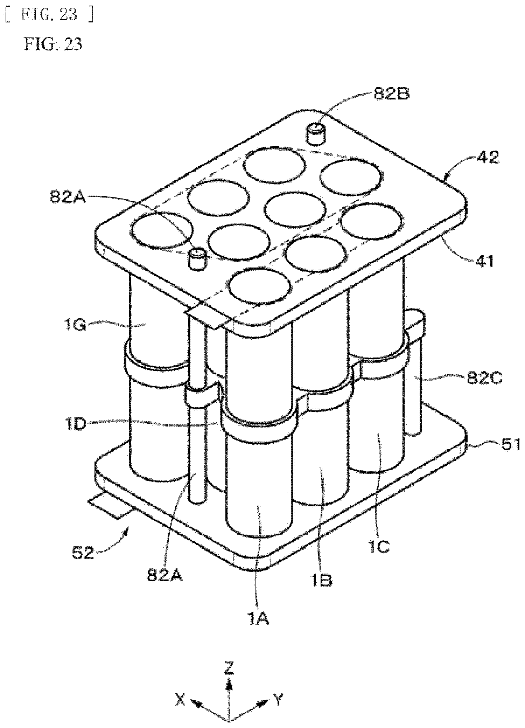

As illustrated in FIG. 22, the integrated body including the first cushion member 41 and the first tab sheet assembly 42 has hole parts 83A and 83B that run through the integrated body in a vertical direction. As illustrated in FIG. 23, a portion near an upper end of the pin 82A is disposed in the hole part 83A, and a portion near an upper end of the pin 82B is disposed through the hole part 83B. The integrated body including the second cushion member 51 and the second tab sheet assembly 52 has three hole parts. As illustrated in FIGs. 22 and 23, a portion near a lower end of the pin 82A, a portion near a lower end of the pin 82B, and a portion near a lower end of the pin 82C are each disposed in corresponding one of the hole parts. As described above, in the battery unit according to the modification, the respective pins included in the battery holder 81 are disposed through the hole parts.

Such a configuration makes it possible to easily align the integrated body including the first cushion member 41 and the first tab sheet assembly 42. Such a configuration also makes it possible to easily align the integrated body including the second cushion member 51 and the second tab sheet assembly 52. Because it is possible to perform easy alignment, welding is performed at an accurate position. It is therefore possible to perform highly reliable welding.

Note that the number, positions, and shapes of the pins may be changed as appropriate. Positions, shapes, etc. of the hole parts through which the respective pins are disposed may also be changed as appropriate. However, the hole parts through which the respective pins are disposed are preferably provided at portions where the cushion member and the two insulating films are continuously stacked on each other, i.e., at portions where the tab is not interposed between the insulating films. A reason for this is that providing the hole parts in the tab reduces a region in which a current flows.

### [Modification 2]

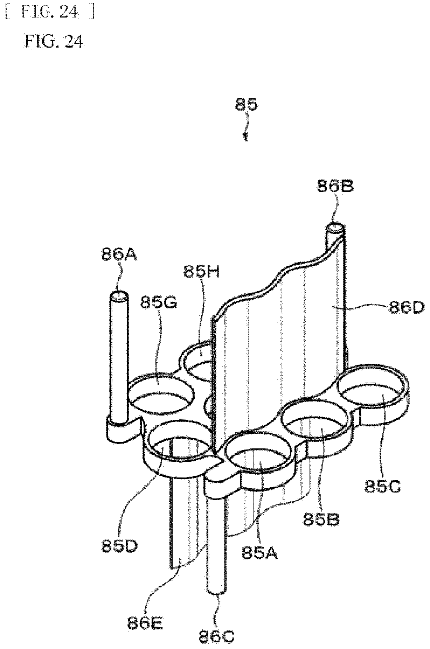

Next, another example of the battery holder will be described. Note that, in this modification, the shape of the tab 43B is partially changed for convenience of explanation. FIG. 24 illustrates a battery holder (a battery holder 85) according to Modification 2. The battery holder 85 has hole parts 85A to 85I the number of which corresponds to the number of the lithium-ion batteries 1, which is nine. In addition, the battery holder 85 includes a pin 86A, a pin 86B, and a pin 86C. The pin 86A and the pin 86B extend upward with respect to a surface on which the hole part 85A, etc. are provided. The pin 86C extends downward with respect to the surface on which the hole part 85A, etc. are provided. The battery holder 85 further includes a rib 86D and a rib 86E. The rib 86D extends upward with respect to the surface on which the hole part 85A, etc. are provided. The rib 86E extends downward with respect to the surface on which the hole part 85A, etc. are provided. The rib 86D and the rib 86E are each a rib that separates portions having mutually different potentials from each other.

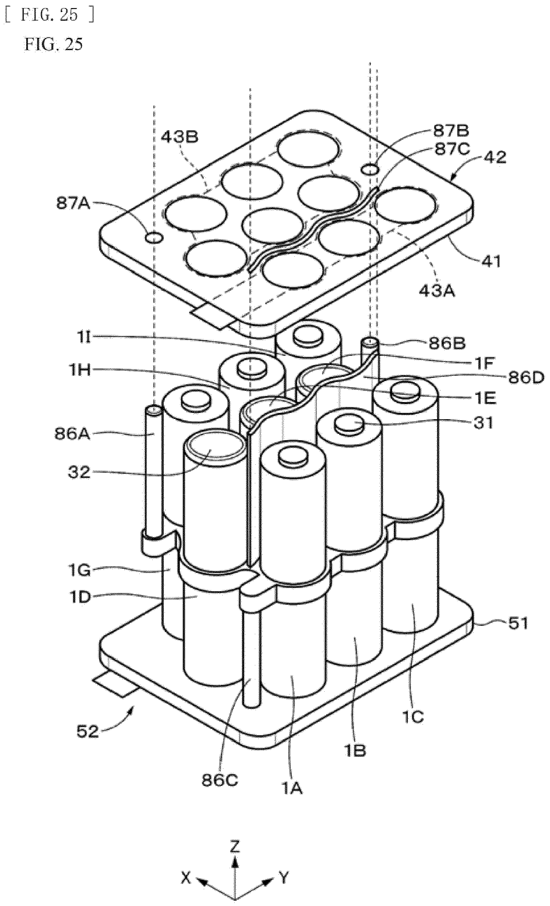

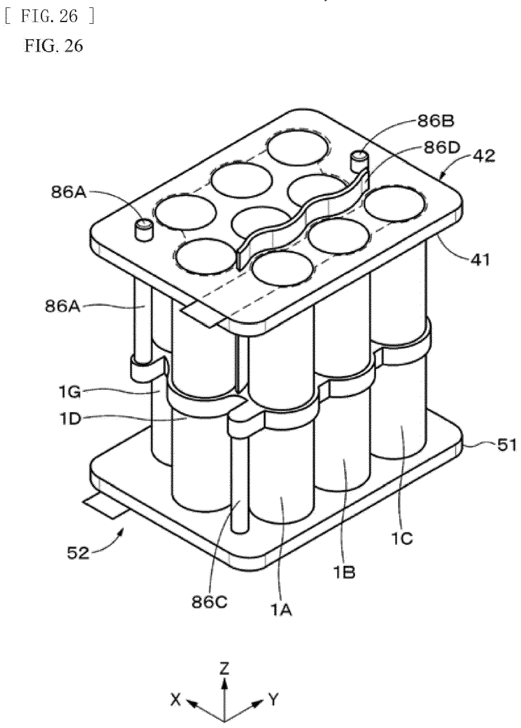

As illustrated in FIG. 25, the integrated body including the first cushion member 41 and the first tab sheet assembly 42 has hole parts 87A and 87B that run through the integrated body in the vertical direction. As illustrated in FIG. 26, a portion near an upper end of the pin 86A is disposed in the hole part 87A, and a portion near an upper end of the pin 86B is disposed in the hole part 87B. Here, the tab 43A (an example of a first electrically conductive member) is welded to the positive electrode terminal 31 (having a positive potential that is an example of a first potential), and a portion of the tab 43B (an example of a second electrically conductive member) is welded to the negative electrode terminal 32 (having a negative potential that is an example of a second potential). That is, a location between the tab 43A and the tab 43B corresponds to a location between the portions having the mutually different potentials. Accordingly, the integrated body including the first cushion member 41 and the first tab sheet assembly 42 has a through groove 87C (see FIG. 25) that allows the rib 86D to be disposed at the above-described location. As illustrated in FIG. 26, disposing the rib 86D in the through groove 87C separates the portions having the mutually different potentials from each other.

Such a configuration makes it possible to achieve, in addition to the effect obtainable in Modification 1, an effect of efficiently preventing a short circuit from occurring due to, for example, contact between the portions having the mutually different potentials during the assembly of the battery unit, or contact of a foreign metal material across the portions having the mutually different potentials. Note that, although not described in detail, the integrated body including the second cushion member 51 and the second tab sheet assembly 52 may also have, for example, a hole part through which the pin 86C is disposed or a through groove through which the rib 86E is disposed.

### [Modification 3]

Modification 3 is an example in which the first cushion member 41 includes a thick part. The thick part refers to a portion where the thickness is relatively great as compared with other portions. Such a thick part is provided at an opening peripheral edge of each of the hole parts provided in the first cushion member 41. Specifically, in each of the hole parts 411A to 41I, the thick part is provided at the opening peripheral edge on a side opposed to the peripheral edge part (e.g., the crimped part 11P or the peripheral edge part 32A) of the terminal part of the lithium-ion battery 1.

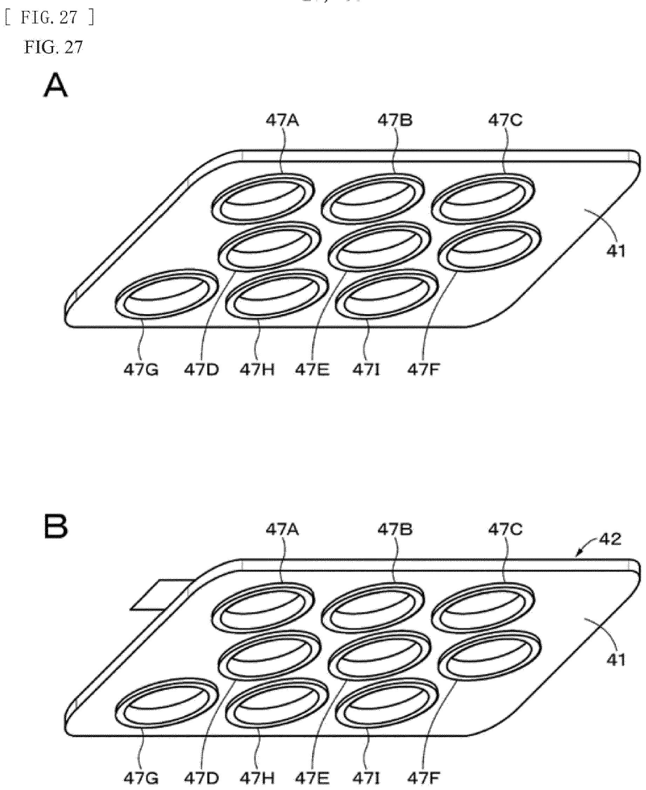

FIG. 27A is a perspective diagram of the first cushion member 41 according to this modification, viewed from a lower side. FIG. 27B is a diagram in which the first tab sheet assembly 42 is added to FIG. 27A. As illustrated in FIGs. 27A and 27B, for example, a thick part 47A, which has a greater thickness than a portion therearound, is provided at an opening peripheral edge on a bottom surface side of the hole part 411A. Thick parts 47B to 47I are each provided at an opening peripheral edge on the bottom surface side of corresponding one of the other hole parts.

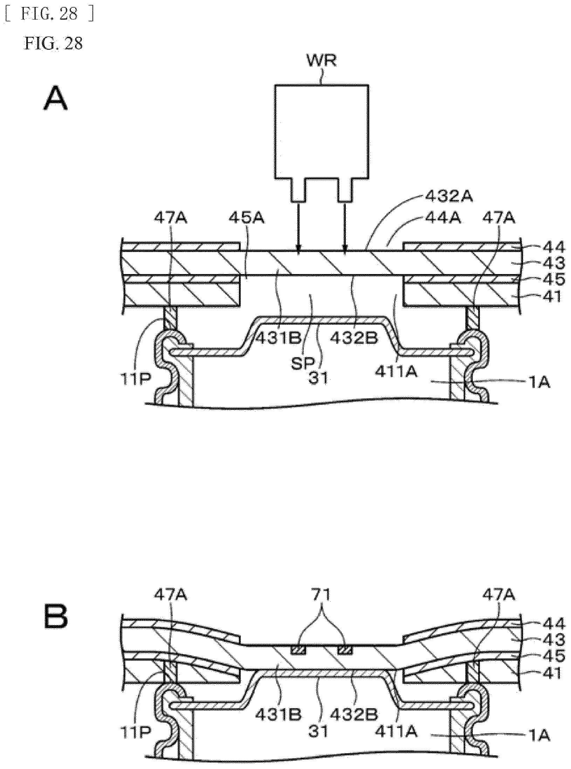

Providing the thick parts 47A to 47I makes it possible to locally concentrate the stress caused by welding, as illustrated in FIGs. 28A and 28B. This makes it possible to highly compress the first cushion member 41, making it possible to further improve a sealing property around the terminal part. Note that the thick part may be provided also in the second cushion member in a similar manner. Note that the thick part may be formed integrally with the cushion member, or may be formed separately from the cushion member and thereafter integrated with the cushion member by a method such as adhesion.

### [Modification 4]

Modification 4 is an example in which the tab in the battery unit includes a reinforcing part. The reinforcing part reinforces a portion around a member such as the above-described hole part or the above-described through groove through which a member such as the pin or the rib is disposed.

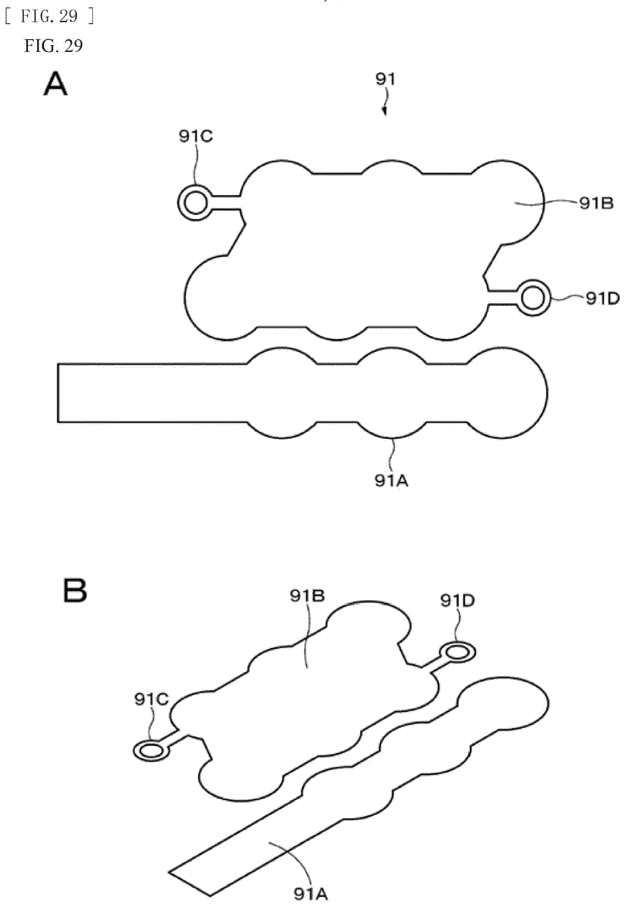

FIG. 29A and 29B each illustrate a tab 91 according to this modification. The tab 91 includes a tab 91A and a tab 91B. The tab 91B includes, for example, two ring parts 91C and 91D. The ring parts 91C and 91D each correspond to an example of the reinforcing part. That is, in this modification, the tab to be welded and the reinforcing part are formed integrally with each other. The ring parts 91C and 91D each have a substantially circular space on an inner side thereof.

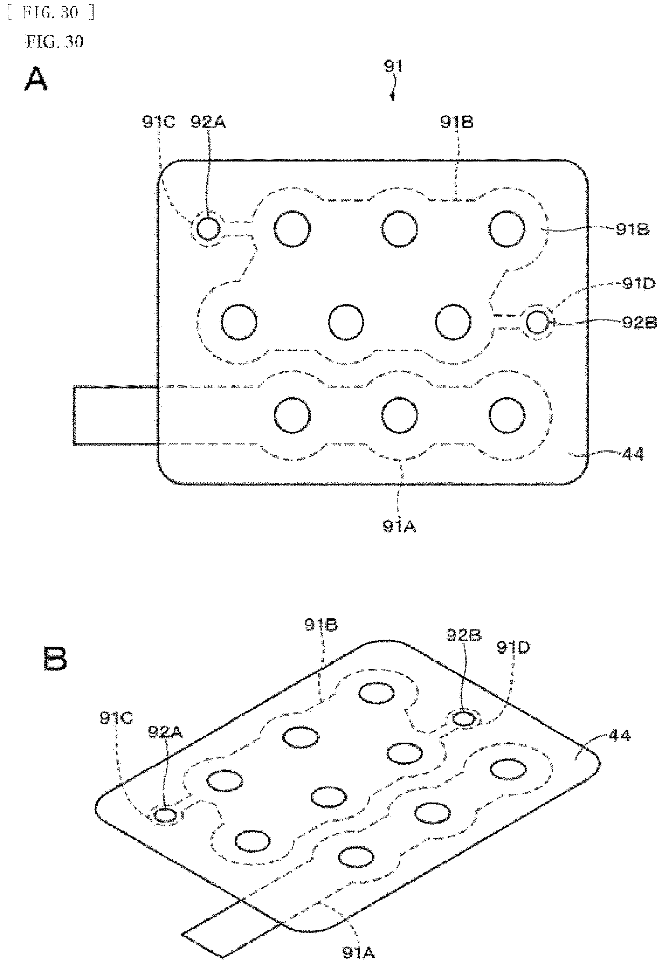

As illustrated in FIGs. 30A and 30B, the tab 91 is sandwiched between the insulating films 44 and 45, as with the tab 43 (or the tab 53). The insulating films 44 and 45 each have hole parts (e.g., hole parts 92A and 92B) through which the respective pins described in Modification 1 or 2 are disposed. The hole part 92A and the hole part 92B are in communication with the spaces on the inner side of the ring part 91C and the ring part 91D, respectively. That is, the ring part 91C is disposed around the hole part 92A, and the ring part 91D is disposed around the hole part 92B. When a pin is placed through a hole part in an insulating film that is thin and has low strength, the insulating film can wrinkle or break, which can make it difficult for the pin to be placed smoothly through the hole part. However, according to this modification, the reinforcing part, which is a portion of the tab including metal, is disposed around the hole part. This makes it possible to smoothly place the pin through the hole part without damaging the insulating film. Note that the reinforcing part may be provided in the tab disposed on the lower side of the battery unit.

### [Other Modifications]

Other modifications will be described. In the embodiment, described is the configuration in which the battery unit includes the first and second insulating films. However, the battery unit may have a configuration without the second insulating film. Further, in the embodiment, two tabs are disposed on the upper side or the lower side. However, the number of the tabs disposed on the upper side or the lower side may be one, or may be three or more. The size of the lithium-ion battery may be 21700 (a diameter of 21 mm and a height of 70 mm), 18650 (a diameter of 18 mm and a height of 65 mm), or any other size. The number and a way of coupling of the lithium-ion batteries included in the battery unit may be changed as appropriate.

Any two or more of the matters described above regarding the embodiment and the modifications may be combined with each other as appropriate. The materials, the processes, etc. described regarding the embodiment are merely examples, and the contents of the invention are not limited to the exemplified materials, etc.

### <Application Examples>

The battery unit according to the invention is mountable on or usable for supplying electric power to, for example, electronic equipment, electric tools, electric vehicles, and various kinds of electronic equipment.

### (Electronic Equipment)

A specific application example will be described. For example, the above-described battery unit is usable as a power source of a wearable device having a function of a mobile information terminal, i.e., what is called a wearable terminal. Examples of the wearable terminal include, without limitation, a wristwatch-type terminal and an eyeglass-type terminal.

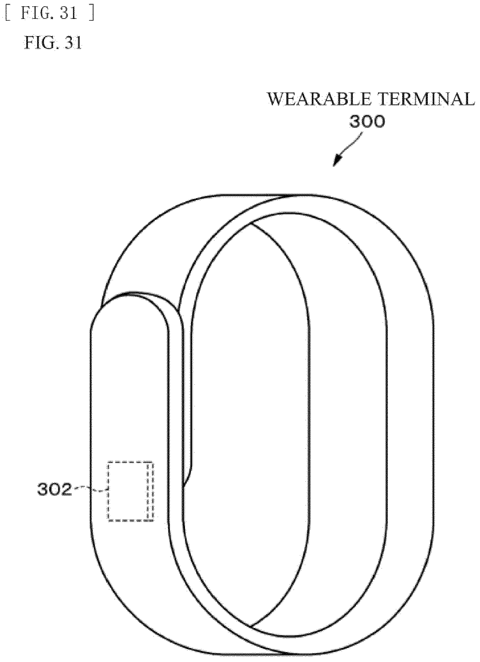

FIG. 31 illustrates an example of a wearable terminal with a small battery unit built therein. As illustrated in FIG. 31, the wearable terminal 300 according to an application example is the wristwatch-type terminal, and includes a battery pack 302 therein. The battery unit according to the invention is applicable as a portion of the battery pack 302. The wearable terminal 300 is wearable by a user to be used. The wearable terminal 300 may be flexible to be deformed.

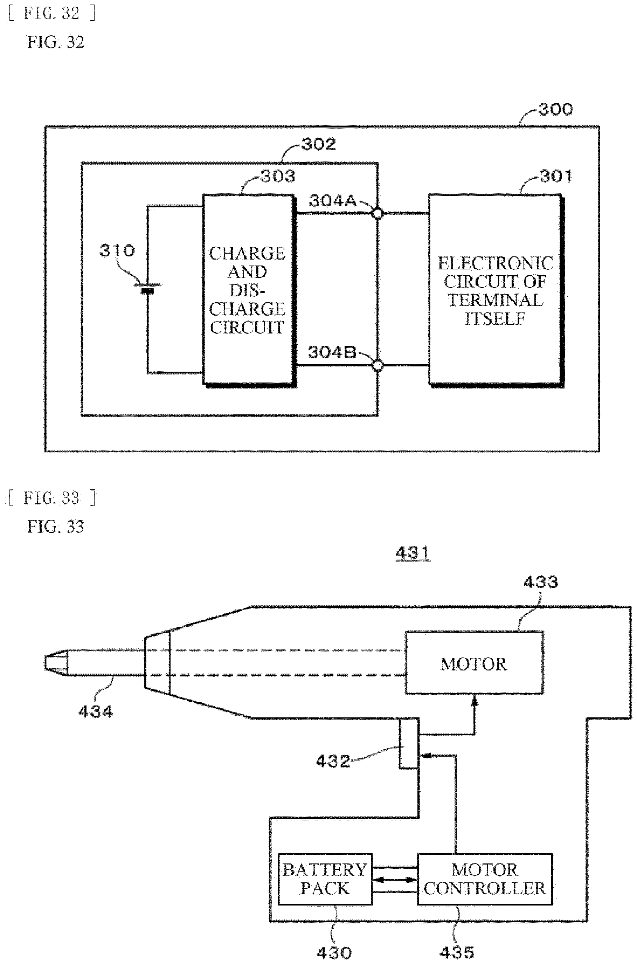

As illustrated in FIG. 32, the wearable terminal 300 according to the application example includes an electronic circuit 301 of the electronic equipment itself and the battery pack 302. The battery pack 302 is electrically coupled to the electronic circuit 301. The wearable terminal 300 has, for example, a configuration in which the battery pack 302 is detachably attached by the user. Note that the configuration of the wearable terminal 300 is not limited to this. The wearable terminal 300 may have a configuration in which the battery pack 302 is so built in the wearable terminal 300 as to prevent the battery pack 302 from being detached from the wearable terminal 300 by the user.

Upon charging of the battery pack 302, a positive electrode terminal 304A and a negative electrode terminal 304B of the battery pack 302 are coupled to a positive electrode terminal and a negative electrode terminal of an unillustrated charger, respectively. Upon discharging of the battery pack 302 (upon use of the wearable terminal 300), the positive electrode terminal 304A and the negative electrode terminal 304B of the battery pack 302 are coupled to a positive electrode terminal and a negative electrode terminal of the electronic circuit 301, respectively.

The electronic circuit 301 includes, for example, a CPU, a peripheral logic unit, an interface unit, a storage, etc., and controls the entire wearable terminal 300.

The battery pack 302 includes a battery unit 310 (e.g., the battery unit in the embodiment, etc.) and a charge and discharge circuit 303. The charge and discharge circuit 303 is mounted on a circuit board.

In this application example, described is an example in which the invention is applied to the battery pack 302. However, the battery unit according to the invention may be mounted on the electronic circuit 301 of the terminal itself.

### (Electric Tool)

As an example of the electric tools to which the invention is applicable, an electric screwdriver will be schematically described with reference to FIG. 33. An electric screwdriver 431 includes a motor 433 and a trigger switch 432. The motor 433 transmits rotational power to a shaft 434. The trigger switch 432 is to be operated by a user. A battery pack 430 and a motor controller 435 are contained in a lower housing of a handle of the electric screwdriver 431. The battery pack 430 is built in or detachably attached to the electric screwdriver 431. The battery unit described above is applicable to the battery pack 430.

The battery pack 430 and the motor controller 435 may include respective unillustrated microcomputers, and may be configured to perform mutual communication regarding charge and discharge information related to the battery pack 430. The motor controller 435 controls operation of the motor 433, and is configured to cut off power supply to the motor 433 under an abnormal condition such as overdischarging.

### (Power Storage System for Electric Vehicles)

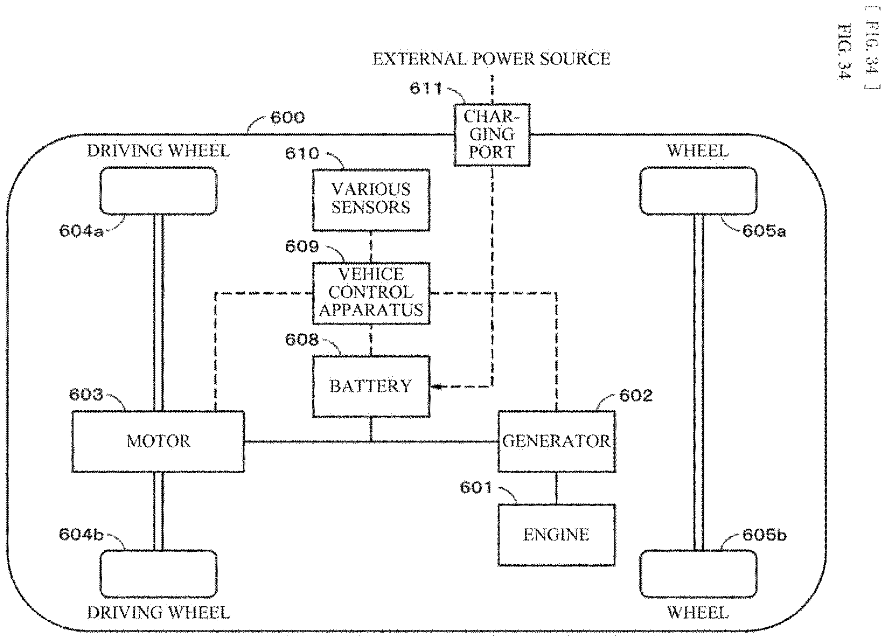

As an example of application of the invention to a power storage system for electric vehicles, FIG. 34 schematically illustrates a configuration example of a hybrid vehicle (HV) that employs a series hybrid system. The series hybrid system relates to a vehicle that travels with an electric-power-to-driving-force conversion apparatus, using electric power generated by a generator that uses an engine as a power source, or using such electric power temporarily stored in a battery.

A hybrid vehicle 600 is equipped with an engine 601, a generator 602, an electric-power-to-driving-force conversion apparatus (a direct-current motor or an alternating-current motor; hereinafter, simply referred to as "motor 603"), a driving wheel 604a, a driving wheel 604b, a wheel 605a, a wheel 605b, a battery 608, a vehicle control apparatus 609, various sensors 610, and a charging port 611. The battery unit of the invention is applicable to the battery 608.

The motor 603 operates under the electric power of the battery 608, and rotational force of the motor 603 is transmitted to the driving wheels 604a and 604b. Electric power generated by the generator 602 using rotational force generated by the engine 601 is storable in the battery 608. The various sensors 610 control, for example, an engine speed and an opening angle of an unillustrated throttle valve via the vehicle control apparatus 609.

When the hybrid vehicle 600 is decelerated by an unillustrated brake mechanism, resistance force at the time of deceleration is applied to the motor 603 as rotational force, and regenerative electric power generated from the rotational force is stored in the battery 608. The battery 608 is chargeable by being coupled to an external power source via the charging port 611 of the hybrid vehicle 600. Such an HV vehicle is referred to as a plug-in hybrid vehicle (PHV or PHEV).

Note that the battery unit according to the invention may be applied to a small-sized primary battery and used as a power source of an air pressure sensor system (a tire pressure monitoring system: TPMS) built in the wheels 604 and 605.

Although the series hybrid vehicle has been described above as an example, the invention is applicable also to a hybrid vehicle of a parallel system in which an engine and a motor are used in combination, or of a combination of the series system and the parallel system. Furthermore, the invention is applicable to an electric vehicle (EV or BEV) and a fuel cell vehicle (FCV) that travel by means of only a driving motor without using an engine.

### Reference Signs List

- 1: lithium-ion battery
- 2: battery unit
- 11P: crimped part
- 31: positive electrode terminal
- 32: negative electrode terminal
- 32A: peripheral edge part
- 41: first cushion member
- 43, 53: tab
- 44, 45, 54, 55: insulating film
- 47A-47I: hick part
- 51: second cushion member
- 81, 85: battery holder
- 82A, 82B, 82C: pin
- 91C, 91D: ring part

## Claims

1. A battery unit comprising:
a battery including a terminal part;
an electrically conductive member electrically coupled to the terminal part and including a first major surface and a second major surface; and
a first insulating film disposed at least on a side of the first major surface of the electrically conductive member; wherein
the first insulating film has an opening,
the electrically conductive member is exposed through the opening, and
a cushion member is further provided, the cushion member being disposed between a peripheral edge part of an end face on which the terminal part is provided and the electrically conductive member, the cushion member surrounding the terminal part.

2. The battery unit according to claim 1, wherein
the terminal part comprises a positive electrode terminal, and
the peripheral edge part of the end face on which the terminal part is provided comprises a crimped part resulting from crimping an outer package of the battery.

3. The battery unit according to claim 1 or 2, wherein the cushion member comprises a foam having waterproofness.

4. The battery unit according to claim 3, wherein the foam is a foam of a closed-cell structure or a foam of a semi-closed-cell structure.

5. The battery unit according to any one of claims 1 to 4, further comprising
a second insulating film disposed on a side of the second major surface of the electrically conductive member, wherein
the first insulating film and the second insulating film are thermal-fusion-bonded to each other.

6. The battery unit according to any one of claims 1 to 5, wherein the electrically conductive member is bent toward the terminal part.

7. The battery unit according to claim 6, wherein the cushion member is sandwiched between the peripheral edge part of the end face and the electrically conductive member.

8. The battery unit according to claim 7, wherein the cushion member is sandwiched with an opening peripheral edge of the cushion member being compressed.

9. The battery unit according to any one of claims 1 to 8, wherein a length from a portion, of the second major surface of the electrically conductive member, that is not coupled to the terminal part to the terminal part is within a range from 0.3 millimeters to 1.0 millimeters.

10. The battery unit according to any one of claims 1 to 9, wherein the first major surface of the electrically conductive member has a welding mark.

11. The battery unit according to any one of claims 1 to 10, further comprising
a battery holder that fixes the battery, wherein
the battery holder includes a pin disposed through a portion where the first insulating film and the cushion member are continuously stacked on each other.

12. The battery unit according to claim 11, wherein
a reinforcing part is provided around a hole part through which the pin is disposed, and
the reinforcing part includes a portion of the electrically conductive member.

13. The battery unit according to claim 11 or 12, wherein
the electrically conductive member includes a first electrically conductive member and a second electrically conductive member, the first electrically conductive member being coupled to the terminal part having a first potential, the second electrically conductive member being coupled to the terminal part having a second potential different from the first potential, and
the battery holder includes a rib that separates the first electrically conductive member and the second electrically conductive member from each other.

14. The battery unit according to any one of claims 1 to 13, wherein the cushion member includes a thick part on an opening peripheral edge of the cushion member, on a side opposed to the peripheral edge part.

15. A method of manufacturing a battery unit, the method comprising:
disposing a cushion member, an electrically conductive member, and an insulating film in order at a peripheral edge part of an end face, of a battery, on which a terminal part is provided;
disposing the electrically conductive member and the terminal part to cause the electrically conductive member and the terminal part to be opposed to each other with a clearance between the electrically conductive member and the terminal part; and
welding the electrically conductive member and the terminal part to each other by compressing the cushion member while pressing a welding rod against a portion, of the electrically conductive member, on an opposite side to a side opposed to the terminal part, and supplying a current to the welding rod.

16. Electronic equipment comprising the battery unit according to any one of claims 1 to 14.

17. An electric tool comprising the battery unit according to any one of claims 1 to 14.

18. An electric vehicle comprising the battery unit according to any one of claims 1 to 14.
